# EUROPEAN PATENT APPLICATION

(11) **EP 4 674 738 A1**
(43) Date of publication of application: **07.01.2026**
(21) Application number: 25187407.9
(22) Date of filing: 03.07.2025
(51) Int. Cl.: B62J 6/015, B62M 3/08, B62J 6/026, B62J 6/06

(54) **LIGHT-EMITTING PEDAL FOR PEDAL-POWERED VEHICLE**

(30) Priority: 03.07.2024 PT 2024119568
(71) Applicant: Fig - Fábrica de Plásticos Lda, 3750-064 Águeda (PT)
(72) Inventor: SANTOS FIGUEIRA, Paulo Sérgio, 3750-064 ÁGUEDA (PT); ESTIMA DE OLIVEIRA, João Pedro, 3750-064 ÁGUEDA (PT)
(74) Representative: Patentree

(57) **Abstract**

Pedal for a pedal-powered vehicle, comprising: a body for receiving a user's foot, wherein the body comprises an upper surface for supporting the user's foot, a front surface, a rear surface, and a bottom surface; a spindle (4) centred by at least two bearings (5), to be connected to a crank of the vehicle; at least one light source (3), wherein the light source is arranged on the front surface of the body or on the rear surface of the body; a generator (1) for supplying power to each of the light emitters; an electronic circuit connected to the light sources, to a capacitor (2), and to the generator; wherein when the user rotates the pedal, the generator converts the mechanical energy from the movement into electrical energy, causing each light source to emit a beam of light; wherein the generator is a motor connected to a planetary gear (8) reducer that is actuated by the pedal spindle.

## Description

### TECHNICAL FIELD

The present disclosure relates to a pedal for a pedal-powered vehicle, namely, a bicycle. Specifically, a light-emitting pedal comprising gears made of a composite polymeric material with high-mechanical strength.

### BACKGROUND

The visibility of cyclists is a concern both for them and for drivers of other vehicles, especially at night or in low-light conditions.

Although there are several solutions on the market, such as bicycle lights mounted on the frame or helmet, these can be insufficient or inadequate.

Originally, bicycle pedals were equipped with reflectors to increase safety when cycling at night. These reflectors were effective depending on external light sources for illumination, such as car headlights. Without an external light source, the reflectors become inoperative.

Current solutions rely on electrical energy from cells and batteries, which represent a serious environmental issue. The substantial increase in the number of bicycles in circulation along with the number of accidents, is creating pressure for new signalling solutions for this type of vehicle, which still use very rudimentary systems, not only for signalling, but also for indicating direction changes.

The present invention aims to solve these problems.

### GENERAL DESCRIPTION

This disclosure relates to a bicycle pedal with an integrated light to illuminate the presence of a cyclist, especially at night or in low-light conditions.

This disclosure is distinguished by using kinetic energy, determined based on the mass of the moving body and its developed speed, to produce the electricity required to generate light at the front and rear parts of the pedal, capable not only of illuminating the chosen route but also of signalling the presence of the bicycle user to vehicles approaching from behind. This pedal solves environmental and safety issues that are not addressed by currently existing solutions. Thus, this disclosure harnesses the rotational kinetic energy resulting from the cyclist's movement and converts it into electrical energy.

A pedal with integrated lighting is presented, which includes more resistant gears, capable of withstanding repeated loads and harsh environments, without compromising the performance of the power generation system or significantly increasing the weight and cost of the assembly.

One of the advantages of this solution is the possibility of mounting the respective pedal on any type of bicycle.

Another advantage of this disclosure is that the pedal remains illuminated when the cyclist is stationary, which allows for its location and visibility throughout the entire route.

Another advantage is that the intensity of the light source and the variation in the intermittence of the emitting light depend on the speed and rhythm at which the cyclist is pedalling. Thus, any vehicle passing the bicycle will perceive the cyclist's speed and its direction.

This pedal does not use batteries or external power sources.

The present disclosure also presents a long-life cycle, since the pedal is manufactured in resistant material, namely a polymer, which prevents damage to the lighting device.

The present disclosure relates to a pedal for a pedal-powered vehicle, comprising:
a body for receiving a user's foot, wherein the body comprises an upper surface for supporting the user's foot, a front surface, a rear surface, and a bottom surface;
a spindle centred by at least two bearings, to be connected to a crank or crank arm of the vehicle;
at least one light source, wherein the light source is arranged on the front surface or rear surface of the body;
a generator, to supply power to each of the light sources;
an electronic circuit that is connected to the light sources, a capacitor, and the generator;
wherein when the user rotates the pedal, the generator converts the mechanical energy from the movement into electrical energy, causing each light source to emit a beam of light,
wherein the generator is a motor connected to a planetary gear reducer that is actuated by the pedal spindle.

In an embodiment, the body is the structure of the pedal.

In an embodiment, the motor is integrally mounted on the pedal, preferably on the pedal body.

In an embodiment, the planetary gear reducer is made of a mixture of polyamide with glass fibers and talc.

In an embodiment, the mixture comprises polyamide and 10 to 30% (w/w) glass fibers and 10 to 30% (w/w) talc, preferably polyamide and 15 to 25% (w/w) glass fibers and 15 to 25% (w/w) talc. More preferably, 20% fibers and 20% talc.

In an embodiment, the pedal comprises a rotation multiplier device for transforming a low rotation of the pedal into a higher rotation to be received by the generator.

The durability and functional resistance of the internal components, particularly the generator and gears, are determining factors for the service life and reliability of the pedal. The gears, responsible for transmitting power and increasing speed, are subject to cyclical loads, friction, and wear, which can lead to premature failure of the reducer. The choice of gear material plays a fundamental role in its ability to withstand these operating conditions.

In an embodiment, the generator comprises a DC motor with planetary gear reducers, particularly a micro DC motor with planetary gear reducers. Some of the advantages of using planetary gear reducers include increased torque applied to the motor shaft; reduced rotational speed-which facilitates manual actuation or actuation through low-speed sources such as wind or human movement; and rotational stabilization, offering high mechanical efficiency in a compact size.

The material of the planetary gear reducer is a mixture of a polymer reinforced with glass fiber and talc. The polymer can be selected from among the polyamides, particularly Polyamide 66.

While glass fiber significantly increases the polyamide's stiffness, tensile strength, and impact resistance, the addition of talc improves stiffness, dimensional stability, and reduces the coefficient of friction. The combination of these materials in a polyamide composite results in the obtention of micro-reducer gears with performance superior compared to that of traditional materials.

It has been shown that the use of polyamide reinforced with glass fiber and talc for the manufacture of gears in planetary micro-reducers presents a synergistic combination of properties that overcome the limitations of conventional materials, offering significant advantages in terms of durability and functional resistance. Some of the advantages are:
Optimized Mechanical Strength: The reinforcement with glass fiber substantially increases stiffness (Young's modulus and flexural modulus), tensile strength, and impact resistance of the polyamide, providing greater capacity to withstand the cyclic loads and stress peaks inherent to the operation of gears in planetary reducers. This greater mechanical strength contributes to reduced deformation under load and increased fatigue resistance, extending the component's service life.
Enhanced Wear Resistance: The addition of glass fiber to polyamide improves its resistance to abrasive wear, a common failure mode in gears. Talc, in turn, acts as an internal solid lubricant, reducing the coefficient of friction and, consequently, heat generation and adhesion wear. The combination of these reinforcements leads to a significantly lower wear rate compared to unreinforced polymers and, under certain conditions, even surpasses the wear resistance of some softer metals.
Reduced Coefficient of Friction: The incorporation of talc into the polyamide matrix contributes to lowering the coefficient of friction at the gear contact interface. A lower coefficient of friction results in less heat generation, lower power loss due to friction, and consequently, higher reducer efficiency and less wear of the contact surfaces.
Enhanced Dimensional Stability: Both glass fiber and talc act as fillers that restrict shrinkage during moulding and reduce the moisture absorption of polyamide. This lower hygroscopicity results in greater dimensional stability of the gears under temperature and humidity variations, while maintaining the dimensional tolerances critical for the proper functioning of the reducer and preventing jamming or uneven wear of the gear teeth.
Cost-Benefit Ratio: Although the cost of reinforced polyamide is higher than that of unreinforced polymers, the significant improvement in durability and service life of the reducer can offset this initial increase, resulting in a lower total cost of ownership due to reduced need for replacements and maintenance. Compared to the manufacture of precision metal gears at microscale, reinforced polyamide offers a high-performance alternative at a potentially lower production cost, especially in large volumes.

In an embodiment, each light source emits a flashing light beam.

In an embodiment, each light source emits a light beam with an intermittence dependent on the speed of the pedal movement.

In an embodiment, each light source emits a light beam at an angle of 20 to 40° relative to the surface on which it is arranged, preferably 30°.

In an embodiment, the light source is a light emitter, particularly a light-emitting diode, particularly a LED.

In an embodiment, each capacitor emits electrical energy to each light source when the pedal is stationary.

In an embodiment, the flashing light beam from the light source has a duration of 30 seconds when the pedal is stationary.

In an embodiment, the spindle is arranged centrally relative to the generator.

In an embodiment, the circuit comprises a processing and control unit.

The present disclosure relates to a vehicle comprising a pedal as described above.

The present disclosure further relates to a bicycle comprising the pedal as described above. Preferably, it comprises two pedals.

### BRIEF DESCRIPTION OF THE DRAWINGS

For an easier understanding, figures are herein attached, which represent preferred embodiments which are not intended to limit the object of the present description.
**Figure 1****:** Schematic representation of an embodiment of the pedal components.
**Figure 2****:** Schematic representation of an embodiment of the pedal.
**Figure 3****:** Schematic representation of an embodiment of a pedal.
**Figure 4****:** Graphical representation of the comparison of materials for an embodiment of the generator.
**Figure 5****:** Schematic representation of the results obtained from the comparison of embodiments.

### DETAILED DESCRIPTION

The present disclosure relates to a pedal with lighting for a vehicle, particularly for a bicycle. This pedal allows the vehicle to be signalled both when in motion and when stationary.

In an embodiment, the pedal can be used on any bicycle, allowing direct replacement of conventional pedals, without the need for any other connection.

In an embodiment, electricity is generated movement of the pedal performed by the user.

In an embodiment, the entire electronics and the power generator are inserted inside the pedal itself, which has the dimensions of a conventional pedal.

The present description relates to a pedal for a pedal-powered vehicle, comprising:
a body for receiving a user's foot, wherein the body comprises an upper surface for supporting the user's foot, a front surface, a rear surface, and a bottom surface;
a spindle centred by at least two bearings, to be connected to a crank or crank arm of the vehicle;
at least one light source, wherein the light source is arranged on the front surface of the body or on the rear surface of the body;
a generator to supply power to each of the light emitters;
an electronic circuit connected to the light sources, to a capacitor, and to the generator;
wherein when the user rotates the pedal, the generator converts the mechanical energy from the movement into electrical energy, causing each light source to emit a beam of light;
wherein the generator is a motor connected to a planetary gear reducer that is actuated by the pedal spindle.

In an embodiment, the pedal comprises:
a rotating and rotatable body for receiving a user's foot, wherein the body comprises an upper surface for supporting the user's foot, a front surface, a rear surface, and a bottom surface;
a spindle connected to a vehicle, wherein the spindle is supported by at least two bearings;
at least two light sources, wherein one light source is arranged on the front surface of the pedal and the other light source is arranged on the rear surface of the pedal;
at least two capacitors;
a generator arranged between the two capacitors to supply power to each of the light emitters;
an electronic circuit that is connected to the light sources, to the capacitor, and to the generator;
wherein when the user rotates the pedal of the vehicle, the generator converts the mechanical energy from the movement into electrical energy, causing each light source to emit a beam of light.

In an embodiment, the pedal comprises two light-emitting sources, preferably two red LED indicators, installed in appropriate lenses on the two visible faces of the pedal when it is in the horizontal position, particularly when the bottom surface of the pedal is parallel to the ground, allowing signalling to the front and rear of the bicycle. Preferably, the light-emitting source, also called indicators, is based on very high-brightness LED technology.

In an embodiment, the electronic board allows, through full-wave rectification, to power the light source, preferably LEDs, both in the forward and reverse rotation directions of the pedal.

The duration of the light emission is extended when the pedal is stationary.

Preferably, the body comprises at least two transparent or translucent covers to protect the light sources, while at the same time allowing light emission.

In an embodiment, the pedal comprises a miniature generator capable of transforming the mechanical energy from the pedal movements into electrical energy (direct current) of very low-voltage that is completely safe for the user.

In an embodiment, the generator is also equipped with a mechanical rotation-multiplying gearbox, which transforms the low rotation of the pedal into higher rotations essential for the functioning of the generator itself.

In an embodiment, the pedal comprises a connection between the generator and the spindle that allows maintaining the centricity of the structure, without deformations, under the force exerted during pedalling.

In an embodiment, the pedal comprises two capacitors to allow the lighting to continue operating even 30 seconds after the pedal is stopped.

In an embodiment, the pedal comprises an electronic board (PCB) for transforming the electrical energy produced by the generator into light energy from the light-emitting source, namely the indicators.

In an embodiment, the angle of the light beam is 20 to 40°, preferably 30°, relative to the surface on which it is arranged, the surface on which the user's foot is placed.

In an embodiment, the generator and the pedal spindle are centred to prevent the generator from collapsing.

In an embodiment, the pedal spindle is positioned between two bearings, thus allowing the spindle and generator to be centred relative to each other. The bearings also allow to reduce friction between the pedal shaft and the pedal body, allowing the pedal to rotate smoothly and without excessive resistance; as well as supporting both radial loads (force perpendicular to the shaft) and axial loads (force along the shaft), and also allow to reduce vibrations.

In an embodiment, the pedal comprises two capacitors. Preferably, the power generator is arranged between the two capacitors.

In an embodiment, the light source is a light emitter, particularly a diode, more particularly a light-emitting diode (LED).

In an embodiment, the generator comprises DC motors with planetary gear reducers, preferably N20 series DC micro-motors. The planetary gear configuration presents a high reduction ratio in a compact volume, with load distribution that results in greater robustness and efficiency compared to other types of micro-scale reducers.

In an embodiment, the motor is fixed to the body of the pedal, and when the crank (or crank arm) is actuated by the pedalling movement of the user, the spindle rotates, causing the planetary gear reducer to rotate as well.

The material of the planetary gear is a combination of polyamide, glass fiber and talc. Preferably, the polyamide is polyamide 66.

In an embodiment, the selected polyamide is preferably polyamide 66.

While glass fiber significantly increases the polyamide's stiffness, tensile strength, and impact resistance, the addition of talc improves stiffness, dimensional stability, and reduces the coefficient of friction. Thus, the combination of the high mechanical strength properties provided by glass fiber, the enhanced wear resistance and friction reduction provided by talc, along with the good dimensional stability of polyamide, offers superior performance compared to conventionally used materials, contributing to greater reliability and longevity of these micro-actuators in advanced technological applications.

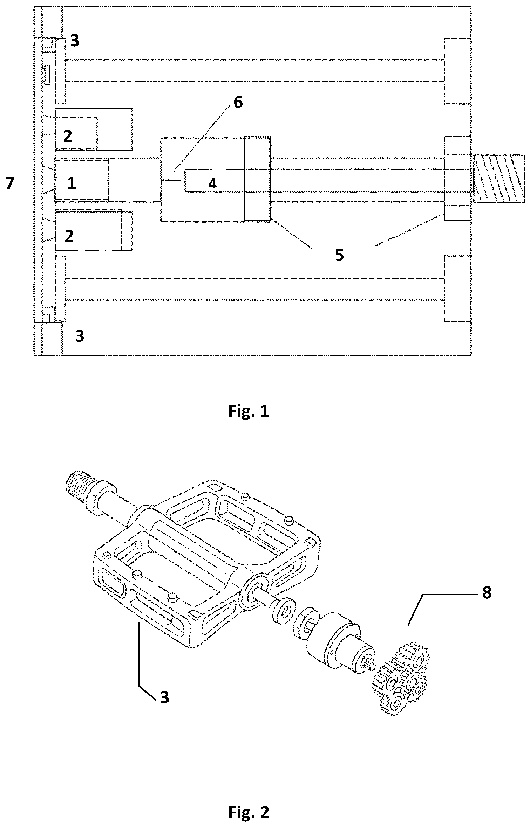

In an embodiment, **Figure 1** represents the pedal components wherein 1 is the generator, 2 is the capacitor, 3 is the light source, preferably LED, 4 is the spindle, 5 are the bearings, 6 is the connection point between the spindle and the generator, and 7 is a circuit board.

In an embodiment, **Figure 2** represents an exploded view of the pedal showing a light source, preferably a LED, a N20 microgenerator, and planetary gear 8.

In an embodiment, the assembly of the pedal begins after the injection of the pedal structure (or body) as a single piece, into which the central spindle is then inserted, around which the pedal performs its rotational movement. Preferably, the spindle is centred on two bearings. The DC motor is inserted inside the pedal, already previously coupled with the planetary gear micro-reducers, with the connection between the pedal spindle and the power generator with the planetary reducers being made by means of a small spindle that starts from the generator and is embedded in the centre of the pedal's central spindle (a "Cone Morse" system). Subsequently, the electronic circuit with the capacitors and one or two LEDs is inserted, and the pedal is sealed with an embedded, ultrasonically welded cover.

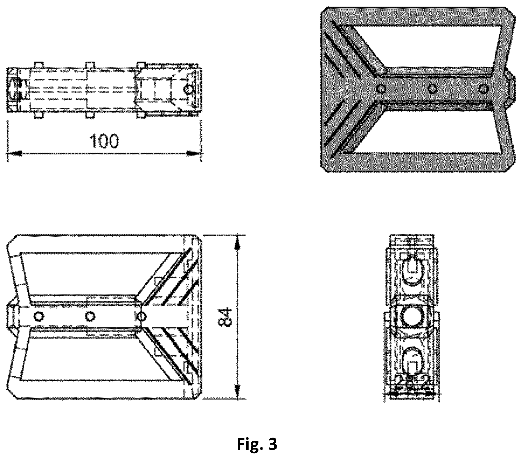

In an embodiment, **Figure 3** represents an example of a pedal.

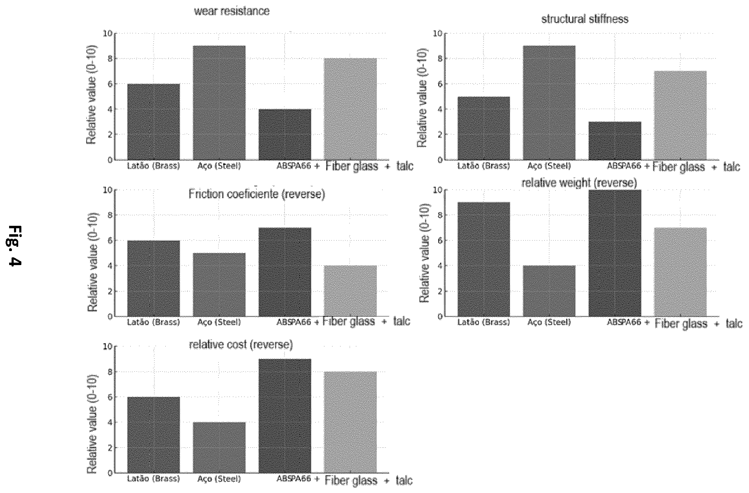

**Figure 4** represents the results obtained from comparing N20 planetary micro-reducers made of polyamide reinforced with glass fiber and talc with micro-reducers made of other materials such as brass, steel, and ABS (Acrylonitrile butadiene styrene). It is observed that in terms of wear resistance, reinforced polyamide shows excellent performance, close to that of steel; in terms of structural rigidity, reinforced polyamide lies between brass and steel, with structural behaviour optimized for light mechanical applications; regarding the coefficient of friction (inverse), the higher the value, the better (less friction), with reinforced polyamide standing out from the other materials; in terms of relative weight (inverse), reinforced polyamide is lighter than metals, which favours mobility applications. Furthermore, in terms of relative cost (inverse), the cost of reinforced polyamide is competitive compared to metal solutions, especially for mass production.

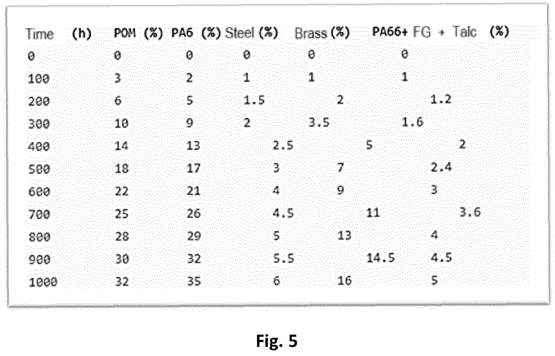

**Figure 5** shows the experimental data obtained in the gear test of the N20 planetary micro-reducers, lasting 1000 hours, carried out under controlled conditions with a constant voltage of 9.0 V and stabilized load, wherein POM represents Polyoxymethylene, PA6 represents Polyamide 6, Steel is a traditional metal alloy, Brass is a yellow metal alloy and PA66+FV+Talc represents Polyamide 66 reinforced with 20% glass fiber and 20% talc. The efficiency loss (%) was analysed, calculated based on the percentage difference between the initial mechanical efficiency of the reducers and the values measured at regular intervals of 100 hours. This indicator provides a direct estimate of the cumulative functional degradation of the internal components of the reducer, reflecting phenomena such as abrasive wear, increased clearances, residual friction and mechanical losses. The results indicate that conventional polymeric materials, such as POM and PA6, showed a pronounced and increasing trend of efficiency loss over time, reaching maximum values of 32% and 35%, respectively, at the end of the 1000 hours of operation. These values suggest a significant degradation of the tribological and dimensional characteristics of conventional polymeric gears, compromising the long-term stability of the mechanical system.

Metallic materials, in turn, such as steel and brass, showed more stable behaviour, with accumulated efficiency losses of only 6% and 16%, respectively. Steel, in particular, stands out for its resistance to fatigue and plastic deformation, presenting the best performance among the materials analysed. However, it should be noted that metallic materials entail penalties in terms of weight, manufacturing cost, and the need for continuous lubrication, critical aspects in compact and low-energy consumption applications.

The developed polymer composite - PA66 reinforced with 20% glass fiber and 20% talc - showed superior behaviour in terms of mechanical stability and wear resistance over the 1000 hours of operation. The recorded efficiency loss did not exceed 5%, being very close to the values observed for steel and significantly better than the other polymeric materials.

This performance can be attributed to the synergy between mineral and fibrous reinforcements: the glass fiber provides high stiffness and mechanical strength, while the talc promotes internal sliding and acts as a solid lubricant, reducing friction between contact surfaces. Furthermore, the composite demonstrated excellent dimensional stability, abrasion resistance, and the ability to operate dry, without the need for additional lubrication.

Tests conducted with other materials, such as polypropylene (PP) reinforced with amounts of glass fiber and talc, show greater wear and lower resistance. The use of polycarbonate (PC) and acetal (POM) presents difficulties in handling and adding glass fiber and talc.

It is found that the use of this new polymeric material represents an optimized solution that combines high functional durability with structural lightness and production savings. Compared to steel, the polyamide reinforced with glass fibers and talc allows for a significant reduction in system weight, maintaining energy efficiency over long periods, and simplifying the manufacturing process, making it ideal for applications such as power-generating pedals in bicycles, where weight, cost, noise, and maintenance criteria are decisive.

The pedal body, in turn, particularly the pedal structure, is made of a high-resistance thermoplastic material. Specifically, polycarbonate reinforced with glass fiber (PC-GF), chosen for its mechanical impact resistance, thermal stability, and fatigue resistance.

The term "comprise" or "comprising" when used herein is intended to indicate the presence of the characteristics, elements, integers, steps and components mentioned, but not to preclude the presence or addition of one or more other characteristics, elements, integers, steps and components, or groups thereof.

The present invention is of course in no way restricted to the embodiments described herein and a person with ordinary skills in the art can foresee many possibilities of modifying it and replacing technical characteristics with equivalent ones, depending on the requirements of each situation as defined in the appended claims.

The following claims define additional embodiments of the present description.

## Claims

1. Pedal for a pedal-powered vehicle, comprising:
a body for receiving a user's foot, wherein the body comprises an upper surface for supporting the user's foot, a front surface, a rear surface, and a bottom surface;
a spindle (4) centred by at least two bearings (5), to be connected to a crank of the vehicle;
at least one light source (3), wherein the light source is arranged on the front surface or on the rear surface of the body;
a generator (1) to supply power to each of the light emitters;
an electronic circuit connected to the light sources, to a capacitor (2) and to the generator;
wherein when the user rotates the pedal, the generator converts the mechanical energy from the movement into electrical energy, causing each light source to emit a beam of light,
wherein the generator (1) is a motor connected to a planetary gear reducer (8) that is actuated by the pedal spindle.

2. Pedal according to the previous claim, wherein the planetary gear reducer (8) is made of a mixture of polyamide with glass fibers and talc.

3. Pedal according to any one of the previous claims, wherein the planetary gear reducer (8) is made of a mixture of polyamide with 10 to 30% (w/w) glass fibers and 10 to 30% (w/w) talc, preferably 15 to 25% (w/w) glass fibers and 15 to 25% (w/w) talc, more preferably 20% fibers and 20% talc.

4. Pedal according to the previous claim, comprising a rotation multiplier device for transforming a low rotation of the pedal into a higher rotation to be received by the generator.

5. Pedal according to any one of the previous claims, wherein the light source (3) emits a flashing light beam.

6. Pedal according to any one of the previous claims, wherein the light source (3) emits a light beam with an intermittence dependent on the speed of the pedal movement.

7. Pedal according to any one of the previous claims, wherein the light source (3) emits a light beam at an angle of 20 to 40° relative to the surface of the body where it is arranged, preferably 30°.

8. Pedal according to any of the previous claims, wherein the light source (3) is a light emitter, in particular a LED.

9. Pedal according to any one of the previous claims, comprising at least one capacitor (2) connected to the generator.

10. Pedal according to the previous claim, wherein the capacitor emits electrical energy to each light source when the pedal is stationary.

11. Pedal according to any one of the previous claims, wherein the light beam from the light source (3) has a duration of 30 seconds when the pedal is stationary.

12. Pedal according to any one of the previous claims, wherein the spindle (4) is arranged centrally relative to the generator.

13. Pedal according to any one of the previous claims, wherein the circuit is an electronic board PCB (7).

14. Vehicle comprising the pedal according to any one of the previous claims.

15. Bicycle comprising the pedal according to any one of claims 1 to 13.
